# EUROPÄISCHE PATENTSCHRIFT

(11) **EP 3 353 235 B1**
(45) Veröffentlichungstag und Bekanntmachung des Hinweises auf die Patenterteilung: **01.01.2020**
(21) Anmeldenummer: 16778240.8
(22) Anmeldetag: 21.09.2016
(51) Int. Cl.: C08J 5/24, C08J 5/04, B62K 19/16

(54) **BAUTEIL AUS EINEM VERBUNDWERKSTOFF SOWIE VERFAHREN ZU DESSEN HERSTELLUNG**
COMPOSITE MATERIAL COMPONENT, AND METHOD FOR THE PRODUCTION THEREOF
PIÈCE CONSTITUÉE D'UN MATÉRIAU COMPOSITE ET SON PROCÉDÉ DE FABRICATION

(30) Priorität: 21.09.2015 DE 102015115879
(43) Veröffentlichungstag der Anmeldung: 01.08.2018
(73) Patentinhaber: MPR GmbH & Co. KG, 95615 Marktredwitz (DE)
(72) Erfinder: PÜRNER, Marcus, 95615 Marktredwitz (DE); DIWISCH, Christoph, 95163 Weissenstadt (DE)
(74) Vertreter: Friderichs, Gunther
(86) Internationale Anmeldenummer: PCT/EP2016/072432
(87) Internationale Veröffentlichungsnummer: WO 2017/050828

(56) Entgegenhaltungen:
- EP-A1- 1 803 635
- EP-A1- 2 335 920
- EP-A2- 0 258 732
- WO-A1-91/08251
- DE-U1-202009 006 966
- JP-A- H0 569 874
- JP-A- H05 147 569
- JP-A- 2008 231 627
- US-A1- 2010 090 518
- DATABASE WPI Week 201438 Thomson Scientific, London, GB; AN 2014-J30495 XP002764742, & JP 2014 083836 A (KB SEIREN LTD) 12. Mai 2014 (2014-05-12)
- DATABASE WPI Week 198911 Thomson Scientific, London, GB; AN 1989-080533 XP002764743, & JP H01 31835 A (KURARAY CO LTD) 2. Februar 1989 (1989-02-02)

## Beschreibung

### Gebiet der Erfindung

Die Erfindung betrifft ein Bauteil aus einem Faserverbundwerkstoff sowie ein Verfahren zu dessen Herstellung. Insbesondere betrifft die Erfindung Fahrradbauteile wie Gabel, Rahmen und Sattelstütze.

### Hintergrund der Erfindung

Es ist bekannt, Bauteile aus faserverstärkten Verbundwerkstoffen für Fahrräder zu verwenden. Insbesondere haben sich in der Praxis Carbonfasern für die Herstellung von Fahrradrahmen sowie anderen Fahrradbauteilen, wie Gabel, Sattelstütze etc., durchgesetzt.

Vorteil dieser Materialien ist das geringe Gewicht bei gleichzeitig hoher Steifigkeit. Nachteilig an Carbonbauteilen ist deren Bruchgefahr. Im Falle einer Überlastung des Bauteils bricht dieses abrupt durch, was zu schweren Unfällen führen kann. Diese Gefahr besteht bei Carbonbauteilen insbesondere dann, wenn diese im beschädigten Zustand weiterverwendet werden. Es ist daher in der Regel beispielsweise erforderlich, nach einem Sturz einen Carbonrahmen aus Sicherheitsgründen auszutauschen, auch wenn dieser keine sichtbaren Brüche aufweist.

Die Dokumente JP H05 69874 A und JP H05 147569 A beschreiben eine Verbundstruktur mit diversen Faserarten, insbesondere auch Metallfasern zur Verstärkung.

Das Dokument JP 2014 083836 A zeigt ein LCP verstärktes Material. Ein LCP-Prepreg ist dabei zwischen zwei Carbonfaserpregs angeordnet. Eine rohrförmige Ausgestaltung wird nicht beschrieben. Das E-Modul des Bauteiles soll durch ein biaxiales textiles Material erhöht werden.

Das Dokument EP 0 258 732 A2 zeigt ein Gelege mit einer Mischung aus Kohlestofffasern und Verstärkungsfasern.

Das Dokument EP 2 335 920 A1 beschreibt die Herstellung eines laminierten Bauteiles.

Das Dokument WO 91/08251 A1 zeigt in allgemeiner Form Hinweise auf Kompositstrukturen, welche ein Harz enthalten und unter anderem LCP-Fasern enthalten können.

Die Dokumente JP 2008 231627 A und JP H01 31835 A zeigen LCP-Prepregs.

Das Dokument US 2010/090518 A1 zeigt eine Fahrradfelge. LCP ist als ein mögliches Material erwähnt.Das Dokument DE 20 2009 006966 U1 beschreibt eine weiche elastomere Schicht, insbesondere Vectran®, die eine Rissbildung verhindern soll.

### Aufgabe der Erfindung

Der Erfindung liegt demgegenüber die Aufgabe zugrunde, die genannten Nachteile des Standes der Technik zu reduzieren. Insbesondere besteht eine Aufgabe der Erfindung darin, ein leichtes Bauteil aus einem Faserverbundwerkstoff bereitzustellen, welches selbst bei einer schweren Beschädigung noch derart zusammenhält, dass die Gefahr eines schweren Unfalls erheblich reduziert wird.

### Zusammenfassung der Erfindung

Die Aufgabe der Erfindung wird bereits durch ein Verfahren zum Herstellen eines Bauteils aus einem Verbundwerkstoff, sowie durch ein zumindest abschnittsweise als Rohr ausgebildetes Bauteil aus einem Verbundwerkstoff nach einem der unabhängigen Ansprüche gelöst.

Bevorzugte Ausführungsformen und Weiterbildungen der Erfindung sind dem Gegenstand der abhängigen Ansprüche zu entnehmen.

Die Erfindung betrifft ein Verfahren zum Herstellen eines Bauteils aus einem Verbundwerkstoff. Insbesondere betrifft die Erfindung die Herstellung von Fahrradbauteilen wie insbesondere Rahmen, Sattelstütze und Gabel.

Gemäß der Erfindung werden Fasern aus einem Flüssigkristallpolymer (LCP) verwendet. Fasern aus einem Flüssigkristallpolymer sind bekannt. Es handelt sich dabei um Polymere, welche ein gewisses Maß an Ordnung aufweisen und welche Mesogene umfassen.

Vorzugsweise werden für die Erfindung Hauptketten-Flüssigkristallpolymere verwendet. Insbesondere kann ein aromatischer Polyester verwendet werden. Derartige Fasern sind kommerziell erhält. Diese werden beispielsweise für hochfeste Seile oder schusssichere Bekleidungsstücke verwendet.

Bei einer Ausführungsform der Erfindung wird eine Flüssigkristallpolymerfaser mit einer Feinheit von 500 bis 2000 dtex verwendet.

Die Fasern aus dem Flüssigkristallpolymer werden mit einem mit einem Lösungsmittel verdünnten Harz benetzt, insbesondere werden diese in das verdünnte Harz eingetaucht.

Hierfür wird insbesondere ein Epoxidharz verwendet. Es kann insbesondere ein Bisphenol-basiertes Epoxidharz verwendet werden.

Das Epoxidharz enthält vorzugsweise einen sauren Härter, was dazu führt, dass die Aushärtung bei höherer Temperatur erfolgt, insbesondere bei über 100 °C.

Das Harz wird mit einem Lösungsmittel, insbesondere mit Butanon, verdünnt.

Vorzugweise wird das Harz auf eine Viskosität eingestellt wird, die 5 bis 30, vorzugsweise 14 bis 18 Sekunden im Standard Ford Cup 4 mm entspricht.

Aus den damit benetzten Fasern wird eine Fasermatte hergestellt, wobei die Fasermatte erwärmt wird und anschließend zu einem Bauteil verpresst wird.

Die Fasern sind dabei als zusammenhängendes Flächengebilde, aber vorzugsweise unidirektional nebeneinander angeordnet und nicht etwa gewebt, gewirkt oder gestrickt.

Gemäß der Erfindung wird zumindest eine Fasermatte mit Flüssigkristallpolymerfasern mit weiteren, anderen Fasermatten mit Carbonfasern gestapelt und zu dem Bauteil verpresst.

Es hat sich herausgestellt, dass bereits eine Lage einer erfindungsgemäßen Fasermatte mit Flüssigkristallpolymerfasern ausreichend ist, um die mechanischen Eigenschaften des herstellten Bauteils erheblich zu verbessern.

Insbesondere werden zwischen 5 und 30 Fasermatten gestapelt, darunter zumindest eine erfindungsgemäße Fasermatte mit Flüssigkristallpolymerfasern.

Die Fasermatte, welche Flüssigkristallpolymerfasern umfasst, ist insbesondere beidseitig zwischen zwei Fasermatten aus Carbonfasern angeordnet.

Es handelt sich also um ein Verbundmaterial, welches aus Fasermatten ausgebildet ist, die in einem Harz eingebettet sind.

Bei den Carbonfasermatten kann es sich um herkömmliche Carbonfasermatten handeln, welche insbesondere auch als Gewebe ausgebildet sein können. Vorzugsweise sind aber auch diese Fasermatten vorimprägniert, insbesondere ebenfalls mit einem Harz, und zwar insbesondere mit einem Epoxidharz.

Der Erfindung liegt die Erkenntnis zugrunde, dass es über die Verwendung eines lösungsmittelhaltigen Harzes möglich ist, auch aus Flüssigkristallpolymerfasern einen Verbundwerkstoff herzustellen, bei welchem die Fasern in der Matrix eingebettet sind und welcher nicht zu Delamination, insbesondere gegenüber angrenzenden Lagen aus Carbonfasermatten, neigt.

Erfindungswesentlich ist dabei, dass es notwendig ist, das Lösungsmittel vor dem Verpressen der hergestellten Fasermatte durch Erwärmen zumindest teilweise zu entfernen.

Es ist zu vermuten, dass die Verwendung des Lösungsmittels zum einen zu einer Aktivierung der Oberfläche der Einzelfasern führt, was einen sicheren Verbund der hergestellten, mit dem Harz vorimprägnierten Fasermatte ermöglicht.

Um eine Delamination der einzelnen Schichten des hergestellten Bauteils zu vermeiden, ist es sodann aber wiederum nötig, das Lösungsmittel durch Erwärmen zu entfernen.

Gemäß der Erfindung werden die benetzten Fasern zunächst mindestens eine Stunde bei über 60 °C, vorzugsweise bei über 70 °C gelagert.

Die Fasern werden aber vorzugsweise nicht über 90 °C erwärmt, um eine Reaktion des Epoxidharzes zu vermeiden.

Sodann werden die Fasern bei einer bevorzugten Ausführungsform der Erfindung bei niedrigerer Temperatur, insbesondere bei unter 50 °C und insbesondere bei Raumtemperatur für mindestens 12 Stunden, vorzugsweise für mindestens 30 Stunden gelagert.

Es hat sich herausgestellt, dass durch diese Verfahrensführung sodann ein Bauteil aus einem Verbundwerkstoff in herkömmlicher Weise durch Verpressen bei hoher Temperatur hergestellt werden kann, welches gegenüber bekannten reinen Carbonwerkstoffen erheblich verbesserte Eigenschaften aufweist.

Selbst bei einem Riss des Bauteils bricht dieses nicht abrupt in zwei Teile auseinander, sondern hat noch eine derart hohe Festigkeit und einen derart hohen Zusammenhalt, dass Unfälle in aller Regel vermieden werden können. Beispielsweise bei der Verwendung als Sattelstütze ist eine gerissene Sattelstütze zwar nicht mehr stabil, ermöglicht dem Fahrer aber dennoch, notdürftig weiter auf dem Sattel sitzen zu können.

Insbesondere die Verwendung des Faserverbundmaterials für eine Fahrradgabel führt ebenfalls zu einer erheblichen Sicherheitsverbesserung.

Das Herstellen der Fasermatten erfolgt bei einer bevorzugten Ausführungsform der Erfindung durch Aufrollen der Fasern auf einer Rolle. Um eine hinreichend große Matte zu erreichen, sollte die Rolle einen entsprechend großen Durchmesser, insbesondere einen Durchmesser von mindestens 50 cm haben.

Vorzugsweise wird auf der Rolle nur eine Faserlage aufgewickelt, so dass die einzelnen Fasern direkt aneinander liegen.

Beim Erwärmen verbinden sich die Fasern durch das Epoxid zu einer Matte, bei welcher die Fasern unidirektional angeordnet sind.

Die so entstandene Matte kann in die gewünschte Form gestanzt oder geschnitten werden.

Sodann wird die Matte mit mehreren Lagen von Fasermatten, insbesondere vorimprägnierten Carbonfasermatten gestapelt und in herkömmlicher Weise in einer Form das Bauteil aus einem Verbundwerkstoff gepresst und ausgebacken.

Vorzugsweise werden die Fasern vor dem Verpressen in Lagen gestapelt, welche maximal um +/- 30° zu einer Haupterstreckungsrichtung des herzustellenden Bauteils ausgerichtet sind. Die Hauptorientierungsrichtung verläuft also längs zum Bauteil. Insbesondere ist auch möglich, sämtliche Faserlagen in einer Richtung zu verlegen, also die einzelnen Faserlagen 0° zueinander auszurichten. Im Unterschied zu Carbonwerkstoffen trägt eine unidirektionale Verlegung der Fasermatten erstaunlicherweise sogar zu einer erhöhten Festigkeit des Bauteils bei.

Das erfindungsgemäß hergestellte Bauteil umfasst mithin in einer Epoxidmatrix angeordnete Flüssigkristallpolymerfasern, welche vorzugsweise maximal in einem Winkel von +/- 30°, vorzugsweise von +/- 15° zueinander ausgerichtet sind.

Zur Herstellung eines entsprechenden Bauteils kann eine vorimprägnierte Fasermatte verwendet werden. Diese umfasst genau eine Lage nebeneinander angeordneter Fasern aus einem Flüssigkristallpolymer, welche mittels eines Harzes miteinander verbunden sind. Die Fasern sind vorzugsweise unidirektional angeordnet.

Die Fasermatte hat vorzugsweise ein Flächengewicht von weniger als 150, besonders bevorzugt von weniger als 110 und ganz besonders bevorzugt von weniger als 80 g/m².

Die Erfindung betrifft des Weiteren ein Bauteil, insbesondere ein Bauteil, wie es wie vorstehend beschrieben hergestellt wurde.

Das Bauteil umfasst zumindest eine Matte mit Flüssigkristallpolymerfasern, welche zwischen Fasermatten aus Carbonfasern eingebettet ist.

Das Bauteil ist gemäß der Erfindung zumindest abschnittsweise als Rohr, insbesondere als kreiszylindrisches Rohr, ausgebildet.

Bei dem Bauteil handelt es sich insbesondere um den Teil eines Fahrradrahmens, um eine Fahrradgabel, um eine Sattelstütze oder um einen Lenker.

Es hat sich herausgestellt, dass ein Bauteil aus einem Verbundwerkstoff aus Carbonfasermatten, bei welchem zwischen den Carbonfasermatten zumindest eine Matte aus Flüssigkristallpolymerfasern eingebettet ist, zum einen eine wesentlich erhöhte Stabilität aufweist. Insbesondere kommt es selbst beim Bruch von Carbonfaserlagen nicht zu einem völligen Versagen des Bauteils.

Weiter kann das Bauteil elastisch ausgebildet sein, was insbesondere bei Verwendung für eine Sattelstütze oder als Teil eines Fahrradrahmens den Komfort erhöht.

Das Rohr ist insbesondere kreiszylindrisch ausgebildet, kann aber auch eine andere Form haben.

Vorzugsweise hat die Matte mit den Flüssigkristallpolymerfasern zu einer Innenwand des Rohrs einen größeren Abstand als zu einer Außenwand des Rohrs. Der Abstand bezieht sich im Sinne der Erfindung immer auf den Abstand der Innenseite bzw. Außenseite bis zum Beginn der Flüssigkristallpolymerfasern.

Es ist insbesondere vorgesehen, dass es einen inneren Bereich aus Carbonlagen gibt, welcher 55 bis 95 %, vorzugsweise 55 bis 80 %, der Wandstärke des Rohrs ausmacht.

Ein äußerer Bereich aus Carbonfasermatten macht gemäß einer Ausführungsform der Erfindung 5 bis 45 %, vorzugsweise 20 bis 40 %, der Wandstärke des Rohrs aus.

Die Lage oder die Lagen aus Flüssigkristallpolymerfasern nehmen bei einer Ausführungsform der Erfindung 2 bis 10 %, vorzugsweise 3 bis 8 %, der Wandstärke des Rohrs ein. Es ist insbesondere vorgesehen, dass vorzugsweise genau eine unidirektional angeordnete Lage aus Flüssigkristallpolymerfasern zwischen einer Vielzahl aus Carbonfasermatten eingebettet ist.

Durch die außenseitig liegenden Carbonfasermatten werden die Flüssigkristallpolymerfasern geschützt und es wird eine Mushroom-Bildung vermieden.

Vorzugsweise sind zwischen der Außenwand des Rohrs und der Matte mit Flüssigkristallpolymerfasern mindestens 3, besonders bevorzugt mindestens 8, Fasermatten aus Carbonfasern angeordnet.

Über die Position der Matte mit Flüssigkristallpolymerfasern können die Eigenschaften des Bauteils gezielt gesteuert werden. So führt eine weiter außen angeordnete Flüssigkristallpolymerfasermatte zu einer höheren Elastizität und daher zu einem höheren Komfort, falls das Bauteil für ein Fahrrad verwendet wird.

Eine weiter innen angeordnete Matte aus Flüssigkristallpolymerfasern sorgt dagegen für eine höhere Steifigkeit.

Das Bauteil, insbesondere das als Rohr ausgebildete Bauteil, umfasst bei einer Ausführungsform der Erfindung insgesamt 10 bis 100, vorzugsweise 20 bis 30, Lagen aus Fasermatten, von welchen mindestens eine Fasermatte eine Lage aus Flüssigkristallpolymerfasern ist.

Bei einer Weiterbildung der Erfindung erstreckt sich die Matte mit Flüssigkristallpolymerfasern nur über einen Teilbereich des Bauteils.

Aufgrund der schwierigen Verarbeitbarkeit von Flüssigkristallpolymerfasern ist insbesondere vorgesehen, ein Bauteil nur in einem mittleren Bereich mit zumindest einer Fasermatte mit Flüssigkristallpolymerfasern zu verstärken. So kann die Matte aus Flüssigkristallpolymerfasern auch eine weniger gute Maßhaltigkeit haben. Die Enden des Bauteils bestehen aus einem herkömmlichen Carbonfaserverbundwerkstoff.

Die Erfindung betrifft insbesondere ein Bauteil, wie es vorstehend beschrieben wurde.

Das Bauteil umfasst eine Vielzahl Fasermatten aus Carbonfasern, welche in ein Harz eingebettet sind. Es handelt sich mithin um einen Verbundwerkstoff aus Carbonfasermatten.

Gemäß der Erfindung ist zwischen den Fasermatten aus Carbonfasern zumindest eine Fasermatte aus Fasern mit einem kleineren E-Modul, insbesondere eine Fasermatte mit Flüssigkristallpolymerfasern, eingebettet.

Die Fasern der Fasermatte aus Fasern mit einem kleineren E-Modul als die Carbonfasern sind erfindungsgemäß im Wesentlichen unidirektional, also in Richtung der Haupterstreckungsrichtung des Bauteils, angeordnet.

Durch das Einbetten zumindest einer Fasermatte mit Fasern, welche ein wesentlich kleineres E-Modul aufweisen, insbesondere durch eine Fasermatte mit Flüssigkristallpolymerfasern, welche im Wesentlichen unidirektional angeordnet sind, konnte ein Bauteil mit höherer Elastizität und größerer Stabilität, insbesondere im Hinblick auf ein völliges Versagen des Bauteils, bereitgestellt werden.

Es ist zu vermuten, dass durch die Fasern mit geringerem E-Modul, insbesondere durch die Flüssigkristallpolymerfasern ein Rohr-in-Rohr-System entsteht, bei welchem sich ein äußerer Bereich des Rohrs gegenüber einem inneren Bereich des Rohrs geringfügig verschieben kann.

Das E-Modul der Fasermatte aus Fasern mit dem kleineren E-Modul beträgt vorzugsweise weniger als die Hälfte, besonders bevorzugt weniger als ein Drittel, des E-Moduls der Carbonfasern.

### Beschreibung der Zeichnungen

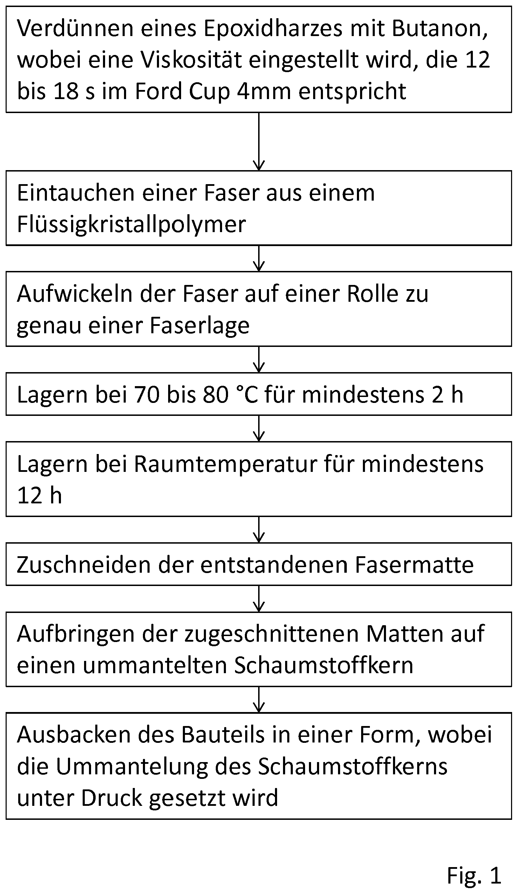

Der Gegenstand der Erfindung soll im Folgenden bezugnehmend auf die Zeichnungen Fig. 1 bis Fig. 4 näher erläutert werden.

Fig. 1 zeigt in einem Flussdiagramm die wesentlichen Verfahrensschritte gemäß eines Ausführungsbeispiels der Erfindung.

Zunächst wird ein Epoxidharz mit Butanon verdünnt, wobei eine Viskosität eingestellt wird, die 12 bis 18 Sekunden im Standard Ford Cup 4 mm entspricht.

Sodann werden Fasern aus einem Flüssigkristallpolymer in das verdünnte Epoxidharz eingetaucht.

Die Fasern werden sodann auf einer Rolle zu genau einer Faserlage aufgewickelt, wobei die Fasern direkt aneinander angrenzen.

Anschließend wird die Rolle mit den Fasern für mindestens 2 Stunden bei 70 bis 80 °C gelagert, wobei das Lösungsmittel wieder entfernt wird.

Sodann lagert die Rolle bei Raumtemperatur für mindestens 12 Stunden.

Die nunmehr entstandene Fasermatte kann zugeschnitten werden.

Die zugeschnittene Matte wird in herkömmlicher Weise mit weiteren Fasermatten, insbesondere Carbonfasermatten, auf einen ummantelten Schaumstoffkern aufgebracht, welcher beispielsweise die Form eines Fahrradrahmens oder einer Fahrradgabel vorgibt.

Beispielsweise können die Fasermatten auf einen Schaumstoffkern, insbesondere aus Polystyrol, aufgelegt werden, welcher in einem Polyamidschlauch angeordnet ist.

Sodann wird das Bauteil in eine Form gelegt und der Polyamidschlauch wird von innen mit Druck beaufschlagt, insbesondere von mindestens 10 bar, damit die Fasern gegen die Wand der Form gedrückt werden.

Bei einer Temperatur von mindestens 120 °C kann so in herkömmlicher Weise ein Verbundwerkstoffbauteil ausgebacken werden.

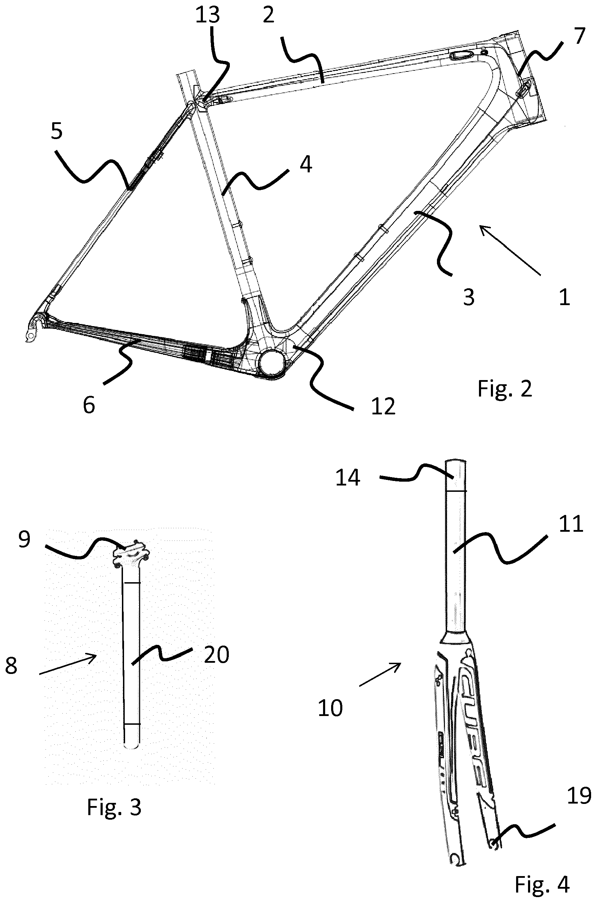

Fig. 2 zeigt eine Ansicht eines Ausführungsbeispiels eines erfindungsgemäß hergestellten Fahrradrahmens 1.

Der Fahrradrahmen ist in diesem Ausführungsbeispiel als Diamantrahmen ausgestaltet.

Sowohl Oberrohr 2, Unterrohr 3, Sitzrohr 4, Sitzstrebe 5, Kettenstrebe 6 als auch Steuerrohr 7 können mit zumindest einer erfindungsgemäß vorimprägnierten Fasermatte aus einem Flüssigkristallpolymer in einer Epoxidmatrix hergestellt werden. Die Fasern der einzelnen Lage sind dabei jeweils in Richtung der Haupterstreckungsrichtung des jeweiligen Rohres bzw. der jeweiligen Strebe ausgerichtet.

In diesem Ausführungsbeispiel wurden für die Rohre und/oder Streben jeweils eine Lage einer Fasermatte mit Flüssigkristallpolymerfasern verwendet. Diese eine Lage wurde zwischen einer Mehrzahl von Carbonfasermatten, insbesondere zwischen 5 und 20 Carbonfasermatten, zwischengelegt und sodann zu einem Verbundmaterial verpresst. Es versteht sich, dass an den Überschneidungsstellen der Rohre und Streben eine größere Anzahl von Fasermatten übereinanderliegen, und zwar in unterschiedlichen Orientierungsrichtungen bezüglich der Fasermatten, welche die Flüssigkristallpolymerfasern umfassen. Die Verbindungsstellen sind so automatisch verstärkt.

Durch die erfindungsgemäße Verfahrensführung ist es gelungen, dass auch der Verbund aus Fasermatten mit Flüssigkristallpolymerfasern mit Carbonfasermatten nicht zur Delamination neigt.

Es versteht sich, dass insbesondere Steuerrohr und Tretlager zur Aufnahme der entsprechenden Lager mit Metallteilen, insbesondere mit Metallhülsen, verstärkt sein können.

Bei einer bevorzugten Ausführungsform der Erfindung sind nur der hoch belastete Bereich, wie insbesondere zumindest der mittlere Bereich der Sitzstreben 5 sowie der Kettenstreben 6, mit einer Fasermatte aus Flüssigkristallpolymerfasern verstärkt.

Die übrigen Rohre, aus welchen der Fahrradrahmen 1 ausgebildet ist, sowie die Tretlagermuffe 12 und die Sitzmuffe 13 bestehen dagegen aus einem anderen Material, insbesondere aus einem Verbundmaterial aus Carbonfasermatten (sogenannter Vollcarbon).

Fig. 3 zeigt eine Ansicht einer Sattelstütze 8. Die Sattelstütze 8 besteht im Wesentlichen aus einem rohrförmigen Abschnitt, welcher erfindungsgemäß mit zumindest einer Fasermatte bestehend aus Flüssigkristallpolymerfasern eingebettet in einer Epoxidmatrix hergestellt ist.

Auf diesem rohrförmigen Abschnitt kann sich zur Befestigung des Sattels beispielsweise eine Platte 9 befinden, an welcher der Sattel festgeschraubt wird bzw. welcher eine Klemmvorrichtung zur Aufnahme des Sattels (nicht dargestellt) umfassen kann.

Die einzelnen Fasern der Matte mit Flüssigkristallpolymerfasern sind vorzugsweise im Wesentlichen unidirektional und in Richtung der Haupterstreckungsrichtung des Bauteils angeordnet.

Es hat sich herausgestellt, dass eine derartige Sattelstütze 8 selbst bei einem Bruch der Matrix der Verbundstruktur noch so hinreichend durch die Flüssigkristallpolymerfasern zusammengehalten wird, dass der Fahrer noch auf dem Sattel notdürftig sitzen kann.

Vorzugsweise ist nur ein mittlerer Bereich 20 der Sattelstütze 8 mit einer Fasermatte aus Flüssigkristallpolymerfasern verstärkt.

Fig. 4 zeigt eine perspektivische Ansicht einer erfindungsgemäß hergestellten Fahrradgabel 10.

Die Fahrradgabel 10 umfasst einen Gabelschaft 11, welcher aus einem anderen Material ausgebildet sein kann, insbesondere welcher als Metallrohr ausgebildet ist.

Im montierten Zustand ist der Gabelschaft 11 über Lager im Steuerrohr (7 in Fig. 1) drehbar gelagert und bildet so zusammen mit dem Steuerrohr und den Lagern den Steuersatz.

Die restliche Fahrradgabel ist aus einem Verbundmaterial, welches Flüssigkristallpolymerfasern umfasst, hergestellt.

Auch bei der Fahrradgabel 10 sind zumindest die Fasern der Lage aus Flüssigkristallpolymerfasern unidirektional in Richtung der Haupterstreckungsrichtung der Fahrradgabel 10 angeordnet. Durch die erfindungsgemäße Verwendung der Flüssigkristallpolymerfasern kann bei einem Bruch der Verbundstruktur ein Abbrechen der Gabel zumeist vermieden werden, was die Sicherheit gegenüber herkömmlichen Carbongabeln erheblich erhöht.

Auch bei der Fahrradgabel 10 ist vorzugsweise ein oberer Bereich 14 nicht mit einer Matte aus Flüssigkristallpolymerfasern verstärkt. So kann die Gabel 10 leicht auf eine gewünschte Länge gekürzt werden.

Auch die Gabelenden 19 sind vorzugsweise nicht mit einer Fasermatte aus Flüssigkristallpolymerfasern verstärkt.

Bei der Herstellung der Fahrradgabel 10 wird eine Matte aus Flüssigkristallpolymerfasern (nicht dargestellt) in eine Form geschnitten, die es ermöglicht, die Matte unterhalb des oberen Bereiches 14 ausgehend um die Fahrradgabel 10 zu legen, so dass diese die gesamte Fahrradgabel 10 einschließlich der Gabelscheiben (mit Ausnahme der Gabelenden 19) umschließt und einmal überlappend um die Fahrradgabel 10 gelegt werden kann. Sodann werden weitere Prepegs mit Carbonfasern aufgelegt.

Es entsteht so ein Bauteil aus einem Carbonfaserverbundwerkstoff, welches zumindest in den besonders hoch belasteten Bereichen, wie dem Übergang vom Gabelschaft zu den Gabelscheiben und dem mittleren Bereich der Gabelscheiben, mit Flüssigkristallpolymerfasern verstärkt ist.

Hierdurch kann ein vollständiges Versagen des Bauteils selbst bei extremer Überbelastung vermieden werden. Gleichzeitig wird durch eine höhere Elastizität der Komfort erhöht.

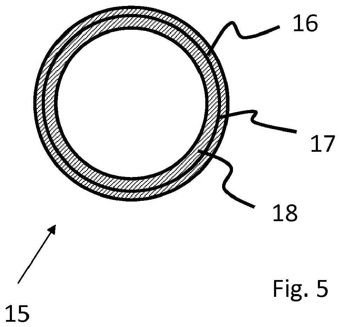

Fig. 5 ist eine schematische Schnittansicht eines erfindungsgemäßen Bauteils 15, welches in diesem Ausführungsbeispiel als Rohr, insbesondere als kreiszylindrisches Rohr, ausgebildet ist.

Das Bauteil 15 besteht aus einer Vielzahl von Carbonfasermatten, die in einer Harzmatrix eingebettet sind.

Es handelt sich bei dem Bauteil mithin um einen Carbonfaserverbundwerkstoff.

Im Unterschied zu herkömmlichen Carbonfaserbauteilen ist das Bauteil 15 durch eine Lage aus Flüssigkristallpolymerfasern 16 verstärkt.

Die Lage aus Flüssigkristallpolymerfasern 16 ist zwischen den Carbonfasern eingebettet, so dass ein innerer Bereich aus Carbonfaserlagen 18 sowie ein äußerer Bereich aus Carbonfaserlagen 17 gebildet ist.

Vorzugsweise ist der äußere Bereich 17 dünner ausgebildet als der innere Bereich 18.

Die Fasern der Lage aus Flüssigkristallpolymerfasern 16 verlaufen vorzugsweise im Wesentlichen unidirektional, also insbesondere in einem Winkel von maximal 30°, besonders bevorzugt maximal 15°, quer zur Haupterstreckungsrichtung des Bauteils.

Aufgrund des geringeren E-Moduls der Flüssigkristallpolymerfasern in Faserrichtung gegenüber den Carbonfasern kann sich der äußere Bereich aus Carbonfaserlagen 17 gegenüber dem inneren Bereich aus Carbonfaserlagen 18 geringfügig bewegen, was zu einer höheren Elastizität des Bauteils 15 führt.

Insbesondere werden Flüssigkristallpolymerfasern verwendet, die ein Elastizitätsmodul zwischen 80 und 130 GPa aufweisen (bei 20°C).

Durch die Erfindung können auf einfache Weise insbesondere Fahrradbauteile mit wesentlich verbesserten Eigenschaften bereitgestellt werden.

### Bezugszeichenliste

- 1: Fahrradrahmen
- 2: Oberrohr
- 3: Unterrohr
- 4: Sitzrohr
- 5: Sitzstrebe
- 6: Kettenstrebe
- 7: Steuerrohr
- 8: Sattelstütze
- 9: Platte
- 10: Fahrradgabel
- 11: Gabelschaft
- 12: Tretlagermuffe
- 13: Sitzmuffe
- 14: oberer Bereich
- 15: Bauteil
- 16: Lage aus Flüssigkristallpolymerfasern
- 17: Carbonfaserlagen
- 18: Carbonfaserlagen
- 19: Gabelende
- 20: Bereich

## Patentansprüche

1. Verfahren zum Herstellen eines Bauteils aus einem Verbundwerkstoff, insbesondere eines Fahrradteils, wobei Fasern aus einem Flüssigkristallpolymer mit einem mit einem Lösungsmittel verdünnten Harz benetzt werden, aus den benetzen Fasern eine Fasermatte hergestellt wird, wobei die Fasermatte erwärmt wird und wobei die Fasermatte zu einem Bauteil verpresst wird, wobei die Fasermatte aus Fasern aus einem Flüssigkristallpolymer mit Fasermatten mit Carbonfasern gestapelt und zu dem Bauteil verpresst wird, **dadurch gekennzeichnet, dass** die benetzten Fasern zunächst mindestens eine Stunde bei über 60 °C gelagert werden, um das Lösungsmittel vor dem Verpressen der hergestellten Fasermatte zumindest teilweise zu entfernen.

2. Verfahren zum Herstellen eines Bauteils aus einem Verbundwerkstoff nach dem vorstehenden Anspruch, **dadurch gekennzeichnet, dass** die Fasern der Fasermatte unidirektional angeordnet sind.

3. Verfahren zum Herstellen eines Bauteils aus einem Verbundwerkstoff nach einem der vorstehenden Ansprüche, **dadurch gekennzeichnet, dass** die benetzten Fasern zunächst mindestens eine Stunde bei über 60°C,vorzugsweise bei über 70 °C und bevorzugt bei unter 90 °C gelagert werden.

4. Verfahren zum Herstellen eines Bauteils aus einem Verbundwerkstoff nach dem vorstehenden Anspruch, **dadurch gekennzeichnet, dass** die benetzten Fasern sodann bei niedrigerer Temperatur, insbesondere bei unter 50 °C für mindestens 12 Stunden, vorzugsweise mindestens 30 Stunden, gelagert werden.

5. Verfahren zum Herstellen eines Bauteils aus einem Verbundwerkstoff nach einem der vorstehenden Ansprüche, **dadurch gekennzeichnet, dass** als Lösungsmittel Butanon verwendet wird.

6. Verfahren zum Herstellen eines Bauteils aus einem Verbundwerkstoff nach einem der vorstehenden Ansprüche, **dadurch gekennzeichnet, dass** das Harz auf eine Viskosität eingestellt wird, die 5 bis 30, vorzugsweise 14 bis 18 Sekunden im Standard Ford Cup 4 mm entspricht.

7. Verfahren zum Herstellen eines Bauteils aus einem Verbundwerkstoff nach einem der vorstehenden Ansprüche, **dadurch gekennzeichnet, dass** die Fasern benetzt werden, indem diese durch das verdünnte Harz gezogen werden.

8. Verfahren zum Herstellen eines Bauteils aus einem Verbundwerkstoff nach Anspruch 2, **dadurch gekennzeichnet, dass** die Fasern vor dem Lagern aufgerollt werden.

9. Verfahren zum Herstellen eines Bauteils aus einem Verbundwerkstoff nach einem der vorstehenden Ansprüche, **dadurch gekennzeichnet, dass** aus den Fasern Matten hergestellt werden, indem die Fasern auf einer Rolle aufgerollt werden.

10. Verfahren zum Herstellen eines Bauteils aus einem Verbundwerkstoff nach einem der vorstehenden Ansprüche, **dadurch gekennzeichnet, dass** die Fasern vor dem Verpressen in Lagen gestapelt werden, welche maximal um +/- 30° zu einer Haupterstreckungsrichtung des herzustellenden Bauteils ausgerichtet sind.

11. Zumindest abschnittsweise als Rohr ausgebildetes Bauteil aus Verbundwerkstoff, insbesondere Fahrradteil, insbesondere Gabel, Sattelstütze oder Rahmen, welches hergestellt ist, indem Fasern aus einem Flüssigkristallpolymer mit einem mit einem Lösungsmittel verdünnten Harz benetzt werden, aus den benetzen Fasern eine Fasermatte hergestellt wird, wobei die Fasermatte erwärmt wird und wobei die Fasermatte zu einem Bauteil verpresst wird, wobei das Bauteil zumindest eine Matte mit Flüssigkristallpolymerfasern umfasst, welche zwischen Fasermatten aus Carbonfasern eingebettet ist, **dadurch gekennzeichnet, dass** die Fasern der Fasermatte mit Flüssigkristallpolymerfasern unidirektional angeordnet sind.

12. Bauteil nach dem vorstehenden Anspruch, **dadurch gekennzeichnet, dass** das Bauteil zumindest abschnittsweise als kreiszylindrisches Rohr ausgebildet ist.

13. Bauteil nach dem vorstehenden Anspruch, **dadurch gekennzeichnet, dass** die Matte mit Flüssigkristallpolymerfasern zu einer Innenwand des Rohrs einen größeren Abstand hat als zu einer Außenwand des Rohrs.

14. Bauteil nach einem der beiden vorstehenden Ansprüche, **dadurch gekennzeichnet, dass** zwischen der Außenwand des Rohrs und der Matte mit Flüssigkristallpolymerfasern mindestens 3, vorzugsweise mindestens 8 Fasermatten aus Carbonfasern angeordnet sind.

15. Bauteil nach einem der vorstehenden Ansprüche, **dadurch gekennzeichnet, dass** sich die Matte mit Flüssigkristallpolymerfasern nur über einen Teilbereich des Bauteils erstreckt.

## Claims

1. A method for manufacturing a component from a composite material, more particularly a part of a bicycle, wherein fibers consisting of a liquid crystal polymer are wetted with a resin that is diluted with a solvent and a fiber mat is made from the wetted fibers, wherein the fiber mat is heated, and wherein the fiber mat is pressed to form a component, wherein the fiber mat that is made of fibers consisting of a liquid crystal polymer is stacked with fibers mats made of carbon fibers and is pressed to form the component, **characterized in that**, initially, the wetted fibers are stored for at least one hour at more than 60 °C to remove the solvent at least in part prior to pressing the manufactured fiber mat.

2. The method for manufacturing a component from a composite material in accordance with the preceding claim, **characterized in that** the fibers of the fiber mat are arranged in a unidirectional manner.

3. The method for manufacturing a component from a composite material in accordance with any one of the preceding claims, **characterized in that**, initially, the wetted fibers are stored at least for one hour at more than 60 °C, preferably at more than 70 °C and more preferably at less than 90 °C.

4. The method for manufacturing a component from a composite material in accordance with the preceding claim, **characterized in that** the wetted fibers are then stored for at least 12 hours, preferably for at least 30 hours, at a lower temperature, more particularly at less than 50 °C.

5. The method for manufacturing a component from a composite material in accordance with any one of the preceding claims, **characterized in that** butanone is used as solvent.

6. The method for manufacturing a component from a composite material in accordance with any one of the preceding claims, **characterized in that** the resin is set to a viscosity that corresponds to 4 mm in the standard Ford cup for 5 to 30, preferably for 14 to 18 seconds.

7. The method for manufacturing a component from a composite material in accordance with any one of the preceding claims, **characterized in that** the fibers are wetted by drawing them through the diluted resin.

8. The method for manufacturing a component from a composite material in accordance with Claim 2, **characterized in that** the fibers are coiled up before being stored.

9. The method for manufacturing a component from a composite material in accordance with any one of the preceding claims, **characterized in that** mats are made from the fibers by coiling them up onto a coil.

10. The method for manufacturing a component from a composite material in accordance with any one of the preceding claims, **characterized in that**, prior to being pressed, the fibers are stacked in layers that are aligned relative to the main extension direction of the component to be manufactured by no more than ± 30°.

11. A component that is made from a composite material and formed as a tube at least in certain sections, more particularly a part of a bicycle, more particularly a fork, a seat tube or a frame, which is manufactured by wetting fibers consisting of a liquid crystal polymer with a resin that is diluted with a solvent, wherein a fiber mat is made from the wetted fibers, wherein the fiber mat is heated, and wherein the fiber mat is pressed to form a component, wherein the component comprises at least one mat made of liquid crystal polymer fibers which are embedded between fiber mats made of carbon fibers, **characterized in that** the fibers of the fiber mat made of liquid crystal polymer fibers are arranged in a unidirectional manner.

12. The component in accordance with the preceding claim, **characterized in that** the component is formed as a circular cylindrical tube at least in certain sections.

13. The component in accordance with the preceding claim, **characterized in that** the mat made of liquid crystal polymer fibers is spaced apart from an inner wall of the tube by a greater distance than from an outer wall of the tube.

14. The component in accordance with the two preceding claims, **characterized in that** at least 3, preferably at least 8 fiber mats made of carbon fibers are arranged between the outer wall of the tube and the mat made of liquid crystal polymer fibers.

15. The component in accordance with any one of the preceding claims, **characterized in that** the mat made of liquid crystal polymer fibers extends only across a partial area of the component.

## Revendications

1. Procédé de fabrication d'un composant en un matériau composite, notamment d'une pièce de vélo, dans lequel des fibres en un polymère à cristaux liquides sont humidifiées avec une résine diluée avec un solvant, un mat de fibres est fabriqué à partir des fibres humidifiées, dans lequel le mat de fibres est chauffé et dans lequel le mat de fibres est comprimé en un composant, dans lequel le mat de fibres en fibres en un polymère à cristaux liquides est empilé avec des mats de fibres avec des fibres de carbone et comprimé en le composant, **caractérisé en ce que** les fibres humidifiées sont d'abord stockées au moins une heure à plus de 60°C pour éliminer au moins partiellement le solvant avant la compression du mat de fibres fabriqué.

2. Procédé de fabrication d'un composant en un matériau composite selon la revendication précédente, **caractérisé en ce que** les fibres du mat de fibres sont disposées de manière unidirectionnelle.

3. Procédé de fabrication d'un composant en un matériau composite selon une des revendications précédentes, **caractérisé en ce que** les fibres humidifiées sont d'abord stockées au moins une heure à plus de 60°C, de préférence à plus de 70°C et de manière préférée à moins de 90°C.

4. Procédé de fabrication d'un composant en un matériau composite selon la revendication précédente, **caractérisé en ce que** les fibres humidifiées sont ensuite stockées à une température inférieure, notamment à moins de 50°C pendant au moins 12 heures, de préférence au moins 30 heures.

5. Procédé de fabrication d'un composant en un matériau composite selon une des revendications précédentes, **caractérisé en ce que** du butanone est utilisé en tant que solvant.

6. Procédé de fabrication d'un composant en un matériau composite selon une des revendications précédentes, **caractérisé en ce que** la résine est réglée sur une viscosité qui correspond à 5 à 30, de préférence 14 à 18 secondes dans la norme Coupe de viscosité Ford 4 mm.

7. Procédé de fabrication d'un composant en un matériau composite selon une des revendications précédentes, **caractérisé en ce que** les fibres sont humidifiées **en ce que** celles-ci sont tirées à travers la résine diluée.

8. Procédé de fabrication d'un composant en un matériau composite selon la revendication 2, **caractérisé en ce que** les fibres sont enroulées avant le stockage.

9. Procédé de fabrication d'un composant en un matériau composite selon une des revendications précédentes, **caractérisé en ce que** des mats sont fabriqués à partir des fibres **en ce que** les fibres sont enroulées sur un rouleau.

10. Procédé de fabrication d'un composant en un matériau composite selon une des revendications précédentes, **caractérisé en ce que** les fibres sont empilées en couches avant la compression, lesquelles sont orientées au maximum de +/- 30° par rapport à une direction d'extension principale du composant à fabriquer.

11. Composant en matériau composite, réalisé au moins par sections en tant que tube, notamment pièce de vélo, notamment fourche, tige de selle ou cadre, qui est fabriqué en ce que des fibres en un polymère à cristaux liquides sont humidifiées avec une résine diluée avec un solvant, un mat de fibres est fabriqué à partir des fibres humidifiées, dans lequel le mat de fibres est chauffé et dans lequel le mat de fibres est comprimé en un composant, dans lequel le composant comprend au moins un mat avec des fibres de polymère à cristaux liquides qui est incorporé entre des mats de fibres en fibres de carbone, **caractérisé en ce que** les fibres du mat de fibres avec des fibres de polymère à cristaux liquides sont disposées de manière unidirectionnelle.

12. Composant selon la revendication précédente, **caractérisé en ce que** le composant est réalisé au moins par sections en tant que tube cylindrique circulaire.

13. Composant selon la revendication précédente, **caractérisé en ce que** le mat avec des fibres de polymère à cristaux liquides a un écart par rapport à une paroi interne du tube supérieur à par rapport à une paroi externe du tube.

14. Composant selon une des deux revendications précédentes, **caractérisé en ce qu'**au moins 3, de préférence au moins 8 mats de fibres en fibres de carbone sont disposés entre la paroi externe du tube et le mat avec des fibres de polymère à cristaux liquides.

15. Composant selon une des revendications précédentes, **caractérisé en ce que** le mat avec des fibres de polymère à cristaux liquides s'étend uniquement sur une région partielle du composant.
